(19) Europäisches Patentamt
European Patent Office
Office européen des brevets

(11) EP 1 319 341 B1

(12) **EUROPEAN PATENT SPECIFICATION**

(45) Date of publication and mention of the grant of the patent:
**03.11.2004 Bulletin 2004/45**

(51) Int Cl.[7]: **A01N 37/52**

(21) Application number: **03005346.6**

(22) Date of filing: **28.04.1999**

(54) **Fungicidal composition for agriculture and horticulture comprising a benzamidoxime compound and a benzimidazole compound**

Fungizide Zusammensetzung für Acker- und Gartenbau enthaltend eine Benzamidoxim-Verbindung und eine Benzimidazol-Verbindung

Composition fongicide pour l'agriculture et l'horticulture comprenant un dérivé benzamidoxime et un dérivé benzimidazole

(84) Designated Contracting States:
**DE FR GB**

(30) Priority: **30.04.1998 JP 13608798**
**17.07.1998 JP 21981598**
**17.08.1998 JP 24655298**

(43) Date of publication of application:
**18.06.2003 Bulletin 2003/25**

(62) Document number(s) of the earlier application(s) in accordance with Art. 76 EPC:
**99917212.5 / 1 077 028**

(73) Proprietor: **NIPPON SODA CO., LTD.**
**Chiyoda-ku, Tokyo 100-8165 (JP)**

(72) Inventors:
- **Wakai, Akira**
  **Taitou-ku, Tokyo 110-0005 (JP)**
- **Hosokawa, Hiroyasu, Nippon Soda Co., Ltd.**
  **Haibara-gun, Sizuo (JP)**
- **Hamamura, Hiroshi, Odawara Res. Cen.**
  **Odawara-shi, Kanagawa 250-0216 (JP)**

(74) Representative:
**Wibbelmann, Jobst, Dr., Dipl.-Chem.**
**Wuesthoff & Wuesthoff,**
**Patent- und Rechtsanwälte,**
**Schweigerstrasse 2**
**81541 München (DE)**

(56) References cited:
**EP-A- 0 919 126**

- **CHEMICAL ABSTRACTS, vol. 128, no. 7, 16 February 1998 (1998-02-16) Columbus, Ohio, US; abstract no. 71982, SANO, SHINSUKE ET AL: "Agricultural/horticultural antimicrobial compositions containing benzamidoximes and SH inhibitors" XP002236679 & AU 97297 79 A (NIPPON SODA CO., LTD., JAPAN;SANO, SHINSUKE; YAMANAKA, HOMARE) 5 January 1998 (1998-01-05)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Field of Invention

The present invention is related to a fungicidal composition for agricultural and horticultural use, and more particularly to a combined fungicidal composition.

Background Art

Benzamidoxime compounds represented by a general formula (1);

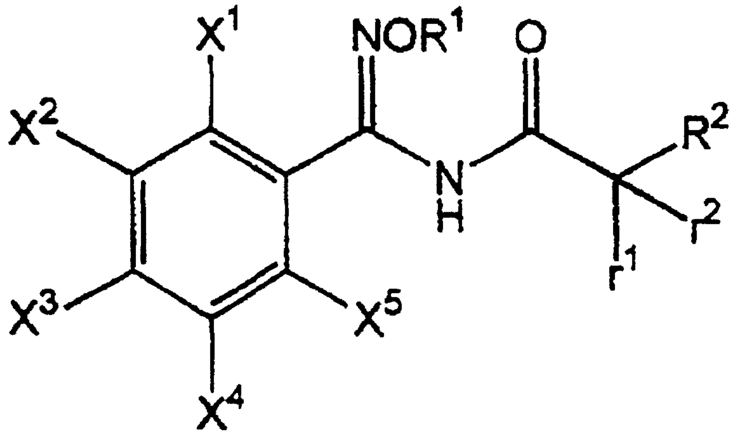

( I )

are the compounds disclosed as having fungicidal activity in JP No. 2696342 gazette, WO No. 96/19442 gazette, JP Laid-open Nos. Hei 235262 gazette and Hei 10-67730 gazette, WO No. 99/14187 gazette, WO No. 99/14188 gazette, etc.

Also, as fungicidal compounds, many compounds, such as benzimidazole compounds have been known. However, no combined fungicidal compositions comprising the compound represented by the general formula (1) and a fungicide selected from a group consisting of benzimidazole compounds showing to have the synergistic fungicidal activity have been reported.

Disclosure of Invention

It is an object of the present invention to provide a combined fungicidal composition capable of reducing the use dose required for other known fungicides, improving the applicable spectrum range and giving the synergistic activity.

The present invention is directed to a fungicidal composition characterized by containing as the active ingredients a benzamidoxime compound represented by a general formula (I);

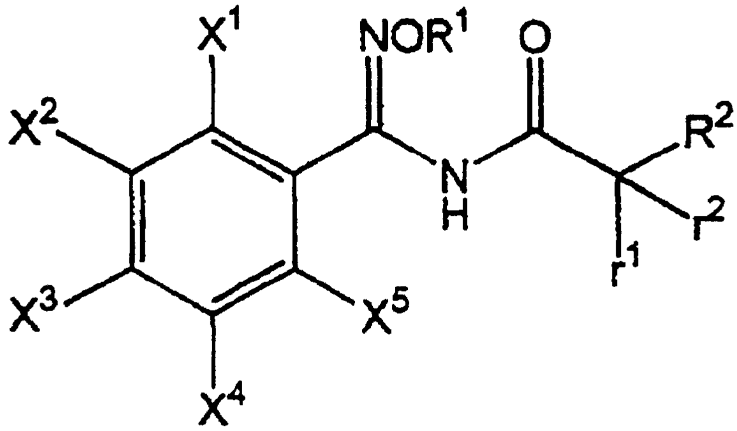

(I)

wherein $R^1$ represents halogeno, $C_{1-4}$ alkyl optionally-substituted with $C_{3-5}$ cycloalkyl, $C_{2-4}$ alkenyl optionally-substituted with halogeno or $C_{2-4}$ alkynyl optionally-substituted with halogeno,

$R^2$ represents phenyl optionally-substituted with halogeno, $C_{1-4}$ alkyl or $C_{1-4}$ alkoxy, or a heterocyclic ring optionally-substituted with halogeno, $C_{1-4}$ alkyl or $C_{1-4}$ alkoxy,

X1 represents halogeno, $C_{1-4}$ haloalkyl or $C_{1-4}$ haloalkoxy,

X2, X3, X4 and X5 represent each independently hydrogen, nitro, amino, halogeno, $C_{1-4}$ alkyl, $C_{1-4}$ haloalkyl, $C_{1-4}$ alkoxy, $C_{1-4}$ haloalkoxy, $C_{1-4}$ alkylthio, $C_{1-4}$ alkylsulfinyl, $C_{1-4}$ alkylsulfonyl or $C_{1-4}$ alkylcarbonylamino,

$r^1$ and $r^2$ represent each independently hydrogen, amino, halogeno, $C_{1-4}$ alkyl, $C_{1-4}$ haloalkyl, $C_{1-4}$ alkoxy or $C_{1-4}$ alkylthio, or $r^1$ and $r^2$ may form in together a carbonyl group,

and one or more compounds selected from a group consisting of benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds.

The benzamidoxime compound used for the present invention is a compound represented by the general formula (I), and one or more of the benzamidoxime compounds can be used as the active ingredients for the fungicidal composition according to the present invention.

As the examples for the group represented by $R^1$, $C_{1-4}$ alkyl, such as methyl, ethyl, propyl, isopropyl, butyl, isobutyl, s-butyl, t-butyl and cyclopropylmethyl, $C_{2-4}$ alkenyl, such as 2-propenyl, allyl, crotyl, 1-butenyl, 2-butenyl and butadienyl, $C_{2-4}$ alkynyl, such as ethynyl, 1-propynyl, 2-propynyl, 1-butynyl, 2-butynyl, 3-butynyl and propagyl, can be given.

The group represented by $R^1$ may be substituted with halogeno, such as fluorine, chlorine, bromine and iodine, or $C_{3-5}$ cycloalkyl, such as cyclopropyl, cyclobutyl and cyclopentyl.

$R^2$ represents phenyl or a heterocyclic ring, such as pyrazolyl and thienyl.

The phenyl or the heterocyclic ring described above may be substituted with halogeno, such as fluorine, chlorine, bromine and iodine, $C_{1-4}$ alkyl, such as methyl, ethyl, propyl, isopropyl, butyl, isobutyl, s-butyl, t-butyl and cyclopropylmethyl, or $C_{1-4}$ alkoxy, such as methoxy, ethoxy, propoxy, isopropoxy, butoxy, isobutoxy, s-butoxy, t-butoxy and cyclopropylmethoxy.

$X^1$ represents halogeno, such as fluorine, chlorine, bromine and iodine, $C_{1-4}$ haloalkyl, such as fluoromethyl, 1-fluoroethyl, 2-fluoroethyl, difluoromethyl, trifluoromethyl and pentafluoroethyl, or $C_{1-4}$ haloalkoxy, such as fluoromethoxy, 1-fluoroethoxy, 2-fluoroethoxy, difluoromethoxy, trifluoromethoxy and pentafluoroethoxy.

$X^2$, $X^3$, $X^4$ and $X^5$ represent each independently hydrogen, nitro, amino, halogeno, such as fluorine, chlorine, bromine and iodine, $C_{1-4}$ alkyl, such as methyl, ethyl, propyl, isopropyl, butyl, s-butyl, t-butyl and cyclopropylmethyl, $C_{1-4}$ haloalkyl, such as fluoromethyl, 1-fluoroethyl, 2-fluoroethyl, difluoromethyl, trifluoromethyl and pentafluoroethyl, $C_{1-4}$ alkoxy, such as methoxy, ethoxy, propoxy, isopropoxy, butoxy, isobutoxy, s-butoxy, t-butoxy and cyclopropylmethoxy, $C_{1-4}$ haloalkoxy, such as fluoromethoxy, 1-fluoroethoxy, 2-fluoroethoxy, difluoromethoxy, trifluoromethoxy and pentafluoroethoxy, $C_{1-4}$ alkylthio, such as methylthio, ethylthio, propylthio and butylthio, $C_{1-4}$ alkylsulfinyl, such as methylsulfinyl and ethylsulfinyl, $C_{1-4}$ alkylsulfonyl, such as methylsulfonyl and ethylsulfonyl, or $C_{1-4}$ alkylcarbonylamino, such as methylcarbonylamino and ethylcarbonylamino.

$r^1$ and $r^2$ represent each independently hydrogen, amino, halogeno, such as fluorine, chlorine, bromine and iodine, $C_{1-4}$ alkyl, such as methyl, ethyl, propyl, isopropyl, butyl, isobutyl, s-butyl, t-butyl and cyclopropylmethyl, $C_{1-4}$ haloalkyl, such as fluoromethyl, 1-fluoroethyl, 2-fluoroethyl, difluoromethyl, trifluoromethyl and pentafluoroethyl, $C_{1-4}$

alkoxy, such as methoxy, ethoxy, propoxy, isopropoxy, butoxy, isobutoxy, s-butoxy, t-butoxy and cyclopropylmethoxy, or $C_{1-4}$ alkylthio, such as methylthio, ethylthio, propylthio and butylthio, and $r^1$ and $r^2$ may form in together carbonyl.

The benzamidoxime compounds used in the present invention are the compounds represented by the general formula (I), and one or more of the benzamidoxime compounds can be used for the fungicidal composition according to the present invention. In Table 1, particularly preferable examples for the benzamidoxime compounds are presented.

Table 1

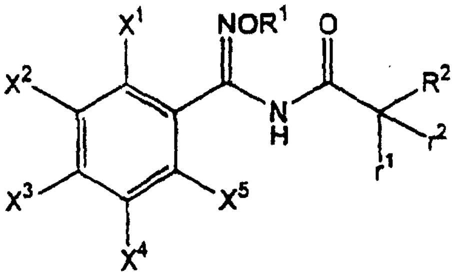

(I)

($r^1$, $r^2$=H)

| No. | $X^1$ | $X^2$ | $X^3$ | $X^4$ | $X^5$ | $R^1$ | $R^2$ |
|---|---|---|---|---|---|---|---|
| 1 | $CF_3$ | H | H | F | F | $CH_2$ 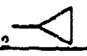 | Ph |
| 2 | $CF_3$ | H | H | Cl | F | $CH_2$ 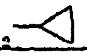 | Ph |
| 3 | $CF_3$ | H | H | F | Cl | $CH_2$ 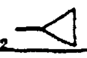 | Ph |
| 4 | $CF_3$ | H | H | Cl | Cl | $CH_2$ 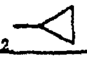 | Ph |
| 5 | $CF_3$ | H | H | F | F | $CH_2$ 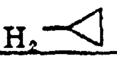 | 2-F-Ph |
| 6 | $CF_3$ | H | H | Cl | F | $CH_2$ 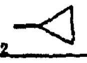 | 2-F-Ph |
| 7 | $CF_3$ | H | H | F | Cl | $CH_2$ 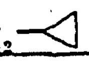 | 2-F-Ph |
| 8 | $CF_3$ | H | H | Cl | Cl | $CH_2$ 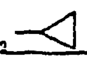 | 2-F-Ph |
| 9 | $CF_3$ | H | H | F | F | $CH_2$ 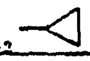 | 2-F-5-Me-Ph |
| 10 | $CF_3$ | H | H | Cl | F | $CH_2$ 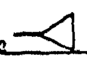 | 2-F-5-Me-Ph |
| 11 | $CF_3$ | H | H | F | Cl | $CH_2$ 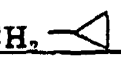 | 2-F-5-Me-Ph |
| 12 | $CF_3$ | H | H | Cl | Cl | $CH_2$ 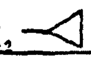 | 2-F-5-Me-Ph |
| 13 | $CF_3$ | H | H | F | F | $CH_2CH_2Cl$ | Ph |
| 14 | $CF_3$ | H | H | Cl | F | $CH_2CH_2Cl$ | Ph |
| 15 | $CF_3$ | H | H | F | Cl | $CH_2CH_2Cl$ | Ph |
| 16 | $CF_3$ | H | H | Cl | Cl | $CH_2CH_2Cl$ | Ph |
| 17 | $CF_3$ | H | H | F | F | $CH_2CH_2Cl$ | 2-F-Ph |
| 18 | $CF_3$ | H | H | Cl | F | $CH_2CH_2Cl$ | 2-F-Ph |
| 19 | $CF_3$ | H | H | F | Cl | $CH_2CH_2Cl$ | 2-F-Ph |

Table 1(Continued)

| | | | | | | | |
|---|---|---|---|---|---|---|---|
| 20 | $CF_3$ | H | H | Cl | Cl | $CH_2CH_2Cl$ | 2-F-Ph |
| 21 | $CF_3$ | H | H | F | F | $CH_2CH_2Cl$ | 2-F-5-Me-Ph |
| 22 | $CF_3$ | H | H | Cl | F | $CH_2CH_2Cl$ | 2-F-5-Me-Ph |
| 23 | $CF_3$ | H | H | F | Cl | $CH_2CH_2Cl$ | 2-F-5-Me-Ph |
| 24 | $CF_3$ | H | H | Cl | Cl | $CH_2CH_2Cl$ | 2-F-5-Me-Ph |
| 25 | $OCHF_2$ | H | H | H | F | $CH_2$ 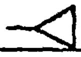 | Ph |
| 26 | $OCHF_2$ | H | H | F | F | $CH_2$ 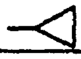 | Ph |
| 27 | $OCHF_2$ | H | H | H | F | $CH_2$ 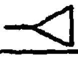 | 4-F-Ph |
| 28 | $OCHF_2$ | H | H | F | F | $CH_2$ 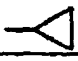 | 4-F-Ph |
| 29 | $OCHF_2$ | H | H | F | F | $CH_2$ 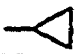 | 4-MeO-Ph |
| 30 | $OCHF_2$ | H | H | Cl | Cl | $CH_2$ 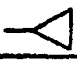 | 4-MeO-Ph |
| 31 | $OCHF_2$ | H | H | H | F | $CH_2CH=CH_2$ | Ph |
| 32 | $OCHF_2$ | H | H | F | F | $CH_2C\equiv CH$ | Ph |
| 33 | $OCF_3$ | H | H | H | F | $CH_2$ 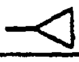 | Ph |
| 34 | $OCF_3$ | H | H | F | F | $CH_2$ 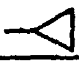 | Ph |
| 35 | Cl | H | H | H | F | $CH_2$ 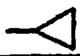 | Ph |
| 36 | Cl | H | H | F | F | $CH_2$ 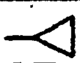 | Ph |
| 37 | Cl | H | H | H | F | $CH_2$ 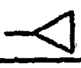 | 4-F-Ph |
| 38 | Cl | H | H | F | F | $CH_2$ 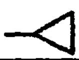 | 4-F-Ph |
| 39 | Cl | H | H | H | F | $CH_2$ 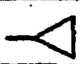 | 4-MeO-Ph |
| 40 | Cl | H | H | F | F | $CH_2$ 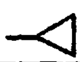 | 4-MeO-Ph |

As examples for the benzimidazole compounds specified in the present invention, thiophanate methyl, benomyl, carbendazim and thiabendazole, are given.

One or more than two compounds of the compounds recited above can be used as the active ingredients for the fungicidal composition according to the present invention.

In the preparation of the fungicidal compounds according to the present invention, the combining rate of the benzamidoxime compound represented by the general formula (I) and the benzimidazole compound/s is in a range of 1 : 0.01-1,000, and preferably in a range of 1: 1-100.

The fungicidal composition of the present invention is commonly admixed with solid carriers, liquid solvents, gaseous diluents, etc., added with surface active agents and other inert ingredients, if required, and is used in a formulation form, such as oily solution, emulsifiable concentrate, wettable powder, granules, powder, aerosol, suspension, foaming preparation, microcapsules, ULV and paste. In these formulations, the active ingredients as exemplified above are contained at the total content of from 0.1 to 99.9 wt%, and more preferably from 0.2 to 80 wt%.

At the formulation of the fungicidal composition, fine powder and granules including clays, such as kaolinite, diatomaceous earth, synthesized silicon hydroxide, fubasami clay, bentonite and acid clay, talc, and other inorganic minerals, such as sericite, silica powder, sulfur powder, activated carbon and calcium carbonate, are used as the solid carrier used for the formulation, whereas alcohols, such as methanol and ethanol, ketones, such as acetone, methyl ethyl ketone and cyclohexanone, aromatic hydrocarbons, such as toluene, xylene, ethyl benzene and methyl naphthalene, nonaromatic hydrocarbons, such as hexane, cyclohexane and kerosine, esters, such as ethyl acetate and butyl acetate, nitriles, such as acetonitrile and isobutylonitrile, ethers, such as dioxane and diisopropyl ether, acid amides, such as dimethylformamide and dimethylacetamide, halogenated hydrocarbons, such as dichloroethane and trichloroethylene, are used as the liquid solvent for the formulation, and carbon dioxide, butane gas, fluorocarbon, etc. are used as the gaseous diluents, namely spray gas, for the gaseous formulation.

As examples for the surface active agent, alkyl sulfates, alkyl sulfonates, alkyl aryl sulfonates, alkyl aryl ethers and their polyoxyethylenated compounds, polyethyleneglycol ethers, polyhydric alcohol esters, sugar alcohol derivatives and the like are given.

As other inert ingredients to be used for the formulations as described above, a sticking agent and a dispersing agent including casein, gelatin, polysaccharides, such as starch, gum Arabic, cellulose derivatives and alginic acid, ligninic acid derivatives, bentonite, synthesized aqueous polymers, such as polyvinyl alcohol, polyvinyl pyrrolidone and polyacrylic acid, and a stabilizing agent including PAP (acidic isopropyl phosphate), BHT (2,6-di-tert-butyl-4-methylphenol), BHA (2-/3-tert-butyl-4-methoxyphenol), vegetable oil, mineral oil, fatty acids, fatty acid esters, etc. are given.

The prepared formulations containing the fungicidal composition according to the present invention are applied either directly or after diluting them with water or the like to plants, to water surface or to soil. In addition, the formulated fungicidal composition can be used in combination with other fungicides, herbicides, fertilizers and soil conditioners. The applying dose of the fungicidal composition of the present invention varies depending upon the combining ratio of the active ingredients, namely the compound represented by the general formula (I) and any of benzimidazole compounds, climatic condition, formulated form, application method, place to apply, objective plant disease and objective crop, however, the applying dose per hectare is normally in a range of from 1 to 1,000 g, and more preferably in a range of from 10 to 100 g. When using any of the emulsifiable concentrate, the suspension, the liquid, or the like of the fungicidal composition after diluting with water, the applying concentration is preferably in a range of from 1 to 1, 000 ppm, and more preferably from 10 to 250 ppm. Whereas, the formulations, such as granules and powder, are normally applied directly without dilution.

The combined fungicidal composition according to the present invention is applicable for controlling agriculturally important plant diseases in wide range, and the representative examples for the plant diseases are presented in the following.

| | |
|---|---|
| Paddy Rice | Rice blast (Pyricularia oryzae) Sheath blight (Rhizoctonia solani) Bakanae disease (Gibberella fujikuroi) Helminthosporium leaf spot (Cochilobolus miyabeabeanus) |
| Barley | Loose smut (Ustilago nuda) |
| Wheat | Scab (Gibberella zeae) |
| | Leaf rust (Puccinia recondite) |
| | Eye spot (Pseudocercosporella herpotrichoides |
| | Glume blotch (Leptosphaeria nodorum) |
| | Powdery mildew (Erysiphe graminis f.sp.tritic |
| | Fusarium snow blight (Micronectriella nivalis |
| Potatoes | Late blight (Phytophthora infestans) |
| Groundnuts | Leaf spot (Mycosphaerella arachidis) |
| Sugarbeets | Cercospora leaf spot (Cercospora beticola) |
| Cucumber | Powdery mildew (Sphaerotheca fuliginea) |
| | Sclerotinia rot (Sclerotinia sclerotiorum) |
| | Gray mold (Botrytis cinerea) |
| | Downy mildew (Pseudoperonospora cubensis) |
| Tomatoes | Leaf mold (Cladosporium fulvum) |
| | Late blight (Phytophthora infestans) |
| Egg plants | Black rot (Corynespora melongenae) |
| Onion | Gray mold (Botrytis allii) |

| | |
|---|---|
| Strawberries | Powdery mildew (Sphaerotheca humuli) |
| Apples | Powdery mildew (Podosphaera leucotricha) |
| | Scab (Venturia inaequalis) |
| | Blossom blight (Monilinia mali) |
| Japanese persimmon | Anthracnose (Gloeosporium kaki) |
| Peaches | Brown rot (Monilinia fructicola) |
| Vine trees | Powdery mildew (Uncinula necator) |
| | Downy mildew (Plasmopara viticola) |
| Pears | Rust (Gymnisporangium asiaticum) |
| | Black spot (Alternaria kikuchiana) |
| Tea plants | Leaf spot (Pestalotia theae) |
| | Anthracnose (Colletotrichum theae-sinensis) |
| Citrus | Scab (Elisinoe fawcettii) |
| | Blue mold (Pennisillium italicum) |
| Lawn | Sclerotinis rot (Sclerotinia borealis) |

Advantageous Effect of the Invention

(Test Example 1) Antifungal Test on Sugar beet Leaf Spot

Sugar beet leaf spot fungus (*Cercospora beticola*) grown beforehand on a potato agar culturing medium containing 2% saccharose was taken out by using a cork borer, and the fungus was placed onto a potato agar culturing medium containing 2% saccharose and the fungicidal composition at a prefixed concentration. After growing the fungus at 25°C under dark condition for 8 days, the diameter of the grown fungus was measured.

Effectiveness Rate (%)= [1-(Diameter of Colony in Treated Plot

/ Diameter of Colony in Untreated Plot)] x 100

The expectable effectiveness rate E was calculated based on Colby's equation (Weed., 15, 20-22, 1996) and was compared with the obtained results in the present test.

$$E= x + y - (X \cdot y/100)$$

E represents an expectable effectiveness rate in % when using active compounds A and B at the concentration of m and n, respectively, x represents an effectiveness rate when using the active compound A at the concentration of m, and y represents an effectiveness rate when using the active compound B at the concentration of n.

Table 1

| Active Compound | | | Actual Effectiveness Rate(%), Figures in () are Calculated Effectiveness Rate(%) | |
|---|---|---|---|---|
| | | Water (Check) | Compound No.1 in Table 1 | |
| | Concentration of Active Compound in Spray Solution (ppm) | - | 1 | 0.1 |
| Water(Check) | - | 0 | 56 | 0 |
| Thiophanatemethyl | 10 | 6 | 75(59) | 19(6) |
| Benomyl | 1 | 6 | 75(59) | 38(6) |

Industrial Use of the Invention

The combined fungicidal composition according to the present invention allows to provide higher fungicidal performance than the one given by the single application of the respective component active ingredient owing to the

synergistic action.

## Claims

1. A fungicidal composition for agricultural and horticultural use **characterized by** containing as the active ingredients a benzamidoxime compound represented by a general formula (I);

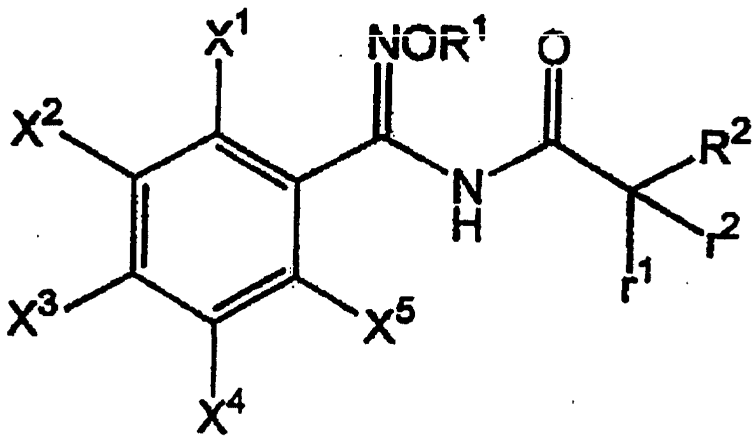

(I)

wherein $R^1$ represents halogeno, $C_{1-4}$ alkyl optionally-substituted with $C_{3-5}$ cycloalkyl, $C_{2-4}$ alkenyl optionally-substituted with halogeno or $C_{2-4}$ alkynyl optionally-substituted with halogeno,

$R^2$ represents phenyl optionally-substituted with halogeno, $C_{1-4}$ alkyl or $C_{1-4}$ alkoxy, or a heterocyclic ring optionally-substituted with halogeno, $C_{1-4}$ alkyl or $C_{1-4}$ alkoxy,

$X^1$ represents halogeno, $C_{1-4}$ haloalkyl or $C_{1-4}$ haloalkoxy,

$X^2$, $X^3$, $X^4$ and $X^5$ represent each independently hydrogen, nitro, amino, halogeno, $C_{1-4}$ alkyl, $C_{1-4}$ haloalkyl, $C_{1-4}$ alkoxy, $C_{1-4}$ baloalkoxy, $C_{1-4}$ alkylthio, $C_{1-4}$ alkylsulfinyl, $C_{1-4}$ alkylsulfonyl or $C_{1-4}$ alkylcarbonylamino,

$r^1$ und $r^2$ represent each independently hydrogen, amino, halogeno, $C_{1-4}$ alkyl, $C_{1-4}$ haloalkyl, $C_{1-4}$ alkoxy or $C_{1-4}$ alkylthio, or $r^1$ and $r^2$ may form in together a carbonyl group, combined with one or more benzimidazole compounds in a ratio of 1 : 0.01-1,000.

2. The fungicidal composition for agricultural and horticultural use according to the claim 1, **characterized in that** the benzamidoxime compound is represented by the general formula (I), wherein $R^1$ represents $C_{1-4}$ alkyl optionally-substituted by $C_{3-5}$ cycloalkyl, $R^2$ represents phenyl optionally-substituted with halogeno, $C_{1-4}$ alkyl or $C_{1-4}$ alkoxy, $X^1$ represents halogeno, $C_{1-4}$ haloalkyl or $C_{1-4}$ haloalkoxy, $X^2$, $X^3$, $X^4$ and $X^5$ represent each independently hydrogen or halogeno, and $r^1$ and $r^2$ represent hydrogen.

3. The fungicidal composition for agricultural and horticultural use according to the claims 1 or 2, wherein the benzimiolazole compound is one or more selected from the group consisting of thiophanate methyl, benomyl, carbendazim and thiabendazole.

## Patentansprüche

1. Fungizide Zusammensetzung zur Verwendung im Acker- und Gartenbau, **dadurch gekennzeichnet, dass** sie als die aktiven Bestandteile eine Benzamidoxim-Verbindung, die durch die allgemeine Formel (I) dargestellt wird:

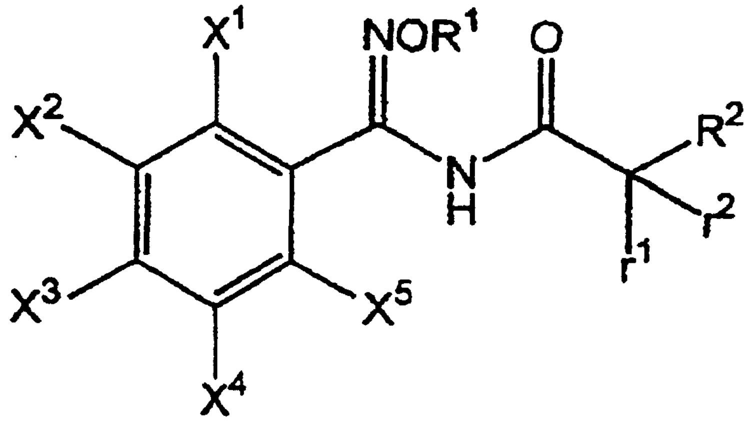

( I )

in der $R^1$ Halogen, gegebenenfalls mit $C_{3-5}$-Cycloalkyl substituiertes $C_{1-4}$-Alkyl, gegebenenfalls mit Halogen substituiertes $C_{2-4}$-Alkenyl oder gegebenenfalls mit Halogen substituiertes $C_{2-4}$-Alkinyl darstellt,
$R^2$ Phenyl, das gegebenenfalls mit Halogen, $C_{1-4}$-Alkyl oder $C_{1-4}$-Alkoxy substituiert ist, oder einen heterocyclischen Ring darstellt, der gegebenenfalls mit Halogen, $C_{1-4}$-Alkyl oder $C_{1-4}$-Alkoxy substituiert ist,
$X^1$ Halogen, $C_{1-4}$-Halogenalkyl oder $C_{1-4}$-Halogenalkoxy darstellt,
$X^2$, $X^3$, $X^4$ und $X^5$ jeweils unabhängig Wasserstoff, Nitro, Amino, Halogen, $C_{1-4}$-Alkyl, $C_{1-4}$-Halogenalkyl, $C_{1-4}$-Alkoxy, $C_{1-4}$-Halogenalkoxy, $C_{1-4}$-Alkylthio, $C_{1-4}$-Alkylsulfinyl, $C_{1-4}$-Alkylsulfonyl oder $C_{1-4}$-Alkylcarbonylamino darstellen,
$r^1$ und $r^2$ jeweils unabhängig Wasserstoff, Amino, Halogen, $C_{1-4}$-Alkyl, $C_{1-4}$-Halogenalkyl, $C_{1-4}$-Alkoxy oder $C_{1-4}$-Alkylthio darstellen oder $r^1$ und $r^2$ zusammen eine Carbonylgruppe bilden können, in Kombination mit einer oder mehreren Benzimidazol-Verbindungen in einem Verhältnis von 1:0,01 - 1000 enthält.

2. Fungizide Zusammensetzung zur Verwendung im Acker- und Gartenbau nach Anspruch 1, **dadurch gekennzeichnet, dass** die Benzamidoxim-Verbindung durch die allgemeine Formel (I) dargestellt wird, in der $R^1$ ein gegebenenfalls mit $C_{3-5}$-Cycloalkyl substituiertes $C_{1-4}$-Alkyl darstellt, $R^2$ ein gegebenenfalls mit Halogen, $C_{1-4}$-Alkyl oder $C_{1-4}$-Alkoxy substituiertes Phenyl darstellt, $X^1$ Halogen, $C_{1-4}$-Halogenalkyl oder $C_{1-4}$-Halogenalkoxy darstellt, $X^2$, $X^3$, $X^4$ und $X^5$ jeweils unabhängig Wasserstoff oder Halogen darstellen und $r^1$ und $r^2$ Wasserstoff darstellen.

3. Fungizide Zusammensetzung zur Verwendung im Acker- und Gartenbau nach den Ansprüchen 1 oder 2, in der die Benzimidazol-Verbindung eine oder mehrere ist, die aus der Gruppe ausgewählt sind, die aus Thiophanatmethyl, Benomyl, Carbendazim und Thiabendazol besteht.

## Revendications

1. Composition fongicide pour l'utilisation en agriculture et en horticulture, **caractérisée en ce qu'**elle contient comme ingrédient actif un composé benzamidoxime représenté par la formule générale (I) ;

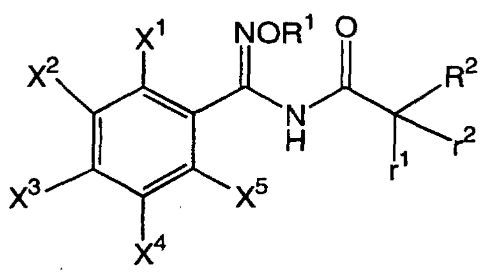

(I)

dans laquelle $R^1$ représente un groupe halogéno, alkyle en $C_{1-4}$ éventuellement substitué par un groupe cycloalkyle en $C_{3-5}$, alcényle en $C_{2-4}$ éventuellement substitué par un groupe halogéno ou alcynyle en $C_{2-4}$ éventuellement substitué par un groupe halogéno,
$R^2$ représente un groupe phényle éventuellement substitué par un groupe halogéno, alkyle en $C_{1-4}$ ou alcoxy

en $C_{1-4}$, ou un cycle hétérocyclique éventuellement substitué par un groupe halogéno, alkyle en $C_{1-4}$ ou alcoxy en $C_{1-4}$,

$X^1$ représente un groupe halogéno, haloalkyle en $C_{1-4}$ ou haloalcoxy en $C_{1-4}$,

$X^2$, $X^3$, $X^4$ et $X^5$ représentent chacun indépendamment l'hydrogène, un groupe nitro, amino, halogéno, alkyle en $C_{1-4}$, haloalkyle en $C_{1-4}$, alcoxy en $C_{1-4}$, haloalcoxy en $C_{1-4}$, alkylthio en $C_{1-4}$, alkylsulfinyle en $C_{1-4}$, alkylsulfonyle en $C_{1-4}$ ou alkylcarbonylamino en $C_{1-4}$,

$r^1$ et $r^2$ représentent chacun indépendamment l'hydrogène, un groupe amino, halogéno, alkyle en $C_{1-4}$, haloalkyle en $C_1$-$_4$, alcoxy en $C_{1-4}$ ou alkylthio en $C_{1-4}$, ou $r^1$ et $r^2$ peuvent former ensemble un groupe carbonyle, combiné avec un ou plusieurs composés benzimidazole selon un rapport de 1 : 0,01 - 1000.

**2.** Composition fongicide pour l'utilisation en agriculture et en horticulture selon la revendication 1, **caractérisée en ce que** le composé benzamidoxime est représenté par la formule générale (I), dans laquelle $R^1$ représente un groupe alkyle en $C_{1-4}$ éventuellement substitué par un groupe cycloalkyle en $C_{3-5}$, $R^2$ représente un groupe phényle éventuellement substitué par un groupe halogéno, alkyle en $C_{1-4}$ ou alcoxy en $C_{1-4}$, $X^1$ représente un groupe halogéno, haloalkyle en $C_{1-4}$ ou haloalcoxy en $C_{1-4}$, $X^2$, $X^3$, $X^4$ et $X^5$ représentent chacun indépendamment l'hydrogène ou un groupe halogéno, et $r^1$ et $r^2$ représentent l'hydrogène.

**3.** Composition fongicide pour l'utilisation en agriculture et en horticulture selon la revendication 1 ou 2, **caractérisée en ce que** le composé benzimidazole est un ou plusieurs du thiophanate de méthyle, du benomyle, du carbendazime et du thiabendazole.